# FASCICULE DE BREVET EUROPEEN

(11) **EP 4 065 377 B1**
(45) Date de publication et mention de la délivrance du brevet: **12.02.2025**
(21) Numéro de dépôt: 20815954.1
(22) Date de dépôt: 26.11.2020
(51) Int. Cl.: B41J 3/60, B65G 47/248, G06K 19/077, G06K 13/07, B65H 15/00, B65H 5/04, B41J 13/12, B41J 3/407, B41J 11/00

(54) **DISPOSITIF DE TRAITEMENT DE PLUSIEURS FACES D'OBJETS, ET PROCÉDÉ DE TRAITEMENT CORRESPONDANT**
VORRICHTUNG ZUR BEHANDLUNG VON MEHREREN OBERFLÄCHEN VON GEGENSTÄNDEN UND ENTSPRECHENDES BEHANDLUNGSVERFAHREN
DEVICE FOR TREATING SEVERAL SURFACES OF OBJECTS, AND CORRESPONDING TREATMENT METHOD

(30) Priorité: 26.11.2019 FR 1913259
(43) Date de publication de la demande: 05.10.2022
(73) Titulaire: Alves, Antonio, 45430 Chécy (FR)
(72) Inventeur: Alves, Antonio, 45430 Chécy (FR)
(74) Mandataire: Boüan du Chef du Bos, Louis-Paterne
(86) Numéro de dépôt international: PCT/IB2020/061168
(87) Numéro de publication internationale: WO 2021/105913

(56) Documents cités:
- EP-B1- 1 705 600
- WO-A1-2011/101701
- WO-A2-2007/104854
- AU-A1- 2007 201 457
- CN-A- 110 126 463
- FR-A1- 2 827 807
- JP-B2- 5 096 718
- US-A1- 2011 090 277
- US-A1- 2018 326 763

## Description

### Domaine de l'invention

La présente invention concerne un dispositif de traitement capable d'effectuer un traitement sur au moins deux faces sensiblement planes d'objets.

L'invention concerne ainsi en particulier un dispositif de traitement capable d'effectuer un traitement sur les deux faces de cartes.

Elle concerne en particulier, mais non exclusivement, un dispositif capable d'imprimer au moins deux faces d'objets, par exemple les deux faces de cartes.

Cette invention s'applique notamment, mais non exclusivement, aux traitements appliqués sur les cartes répondant aux conditions définies par les normes ISO 7810 et 7816.

L'invention concerne également un procédé de traitement de plusieurs faces d'objets.

### Art antérieur

De très nombreux objets présentent plusieurs faces sensiblement planes. Parmi ces objets, on peut trouver un grand nombre d'objets plats, comme par exemple les cartes, qui présentent essentiellement deux faces opposées l'une à l'autre. On considère comme des faces opposées, dans la présente description, les faces d'un objet sensiblement parallèles et orientées dans des directions opposées.

On peut trouver également, par exemple, des objets parallélépipédiques tels que des boites, par exemple boites de cigarettes, boites de bonbons ou autre, qui peuvent présenter six faces, opposées deux à deux. Il est souvent utile d'effectuer des traitements sur la surface de plusieurs de ces faces, comme par exemple des impressions. Ces traitements peuvent avoir pour effet d'apporter une personnalisation sur l'objet subissant ce traitement.

Parmi ces objets, les cartes, réalisées le plus souvent en matière plastique, sont aujourd'hui utilisées dans de multiples applications, par exemple comme moyen de paiement, ou comme document officiel d'identification. Elles peuvent ainsi présenter des pistes magnétiques ou des puces électroniques leur permettant d'être utilisées comme des cartes de paiement ou des cartes bancaires, des cartes d'identification, des cartes de fidélité, etc. La plupart des cartes utilisées sont fabriquées en respectant les conditions définies par les normes ISO 7810 et 7816. Ces cartes sont généralement rigides ou semi-rigides, et ne sont pas destinées à être pliées. Cette caractéristique impose des conditions de manipulation particulières pour les cartes.

Dans un grand nombre d'applications, il est nécessaire que l'aspect extérieur des cartes soit personnalisé, par exemple pour faire apparaître le nom du titulaire de la carte, un numéro, etc. Cette personnalisation peut être obtenue par au moins un traitement tel que l'impression de ces caractéristiques sur les faces de la carte, par exemple par un procédé connu d'impression par jet d'encre ou par un procédé de gravage laser. D'autres traitements, comme un collage d'étiquette ou un vernissage, peuvent être réalisés sur les faces de la carte.

De plus en plus, il est souvent demandé que les deux faces de chaque carte soient imprimées de façon personnalisée, ou subissent le même traitement. Un tel traitement des deux faces peut être obtenu en faisant passer successivement la carte dans deux équipements de traitement, et en la retournant entre ces deux équipements. Un tel procédé nécessite cependant la mise en œuvre d'un dispositif volumineux et coûteux.

On connaît également des dispositifs de traitement présentant un chemin de retour permettant de renvoyer une carte, après son passage par une imprimante, en amont de cette imprimante, afin que sa seconde face soit imprimée. De tels dispositifs imposent la mise en place de convoyeurs de retour qui augmentent le volume du dispositif d'impression.

De la même façon, quand un objet présentant plusieurs faces doit subir un même traitement sur plusieurs de ses faces, il est souvent nécessaire de faire passer cet objet, successivement, dans plusieurs équipements de traitement, en le retournant entre chacun de ces équipement pour présenter une face différente à chaque équipement. Un tel procédé nécessite la mise en œuvre d'un dispositif volumineux et coûteux. Le document US2011090277A1 montre ainsi un dispositif permettant d'imprimer sur les deux faces de cartes mémoire utilisant un bras manipulateur.

### Objectifs de l'invention

La présente invention a pour objectif de pallier ces inconvénients de l'art antérieur.

En particulier, la présente invention a notamment pour objectif de proposer un dispositif apte à traiter plusieurs faces d'un objet, et par exemple les deux faces d'une carte, qui présente un encombrement et un coût réduits.

L'invention a également pour objectif de fournir un tel dispositif qui permette d'effectuer le traitement à une cadence élevée.

Un autre objectif de l'invention est de proposer un tel dispositif qui présente une maintenance simple et rapide.

### Exposé de l'invention

Ces objectifs, ainsi que d'autres qui apparaîtront plus clairement par la suite, sont atteints à l'aide d'un dispositif de traitement de plusieurs faces d'objets, comprenant au moins un équipement de traitement apte à effectuer un traitement sur une face d'un objet présentée en regard du ou des équipements de traitement, ce dispositif comprenant également, selon l'invention,
- une navette présentant au moins deux emplacements adaptés pour recevoir des objets, la navette étant montée mobile entre une première position et une seconde position, en passant par des positions intermédiaires dans lesquelles elle présente une face des objets placés dans les emplacements en regard du ou des équipements de traitement ;
- un premier équipement de manipulation, apte à placer un objet dans un premier des emplacements, quand la navette est dans la première position ;
- un second équipement de manipulation apte à retirer un objet placé dans le second emplacement ; et
- un troisième équipement de manipulation apte à retirer un objet placé dans le premier emplacement et à le tourner avant de le placer dans le second emplacement.

Ainsi, plusieurs faces d'un même objet peuvent être traitées par le même équipement de traitement, même si celui-ci n'est conçu pour n'appliquer son traitement que sur une face à la fois. La navette, effectuant des allers-retours entre sa première position et sa seconde position, permet à chaque aller-retour de traiter une face d'au moins deux objets différents. La succession de ces allers-retours permet de traiter, à une cadence rapide, plusieurs faces de multiples objets.

Il est à noter que, de préférence, les équipements de traitement n'effectuent de traitements sur les faces des objets que quand ceux-ci passent en regard des équipements de traitement en se déplaçant de la première position vers la seconde position de la navette. Il est cependant possible, de façon alternative ou complémentaire, que les équipements de traitement effectuent des traitements sur les faces des objets quand ceux-ci passent en regard des équipements de traitement en se déplaçant de la seconde position vers la première position de la navette.

Avantageusement, le troisième équipement de manipulation est placé de façon à manipuler les objets portés par la navette quand la navette est dans la seconde position.

Ainsi, le déplacement de l'objet du premier emplacement vers le second emplacement se fait en aval des équipements de traitement. Il est également possible, dans d'autres modes de réalisation, que ce retournement se fasse à d'autres positions.

Il est par exemple possible que, après un passage en regard des équipements de traitement, la navette revienne vers sa première position avec l'objet contenu dans son premier emplacement, et que le retrait de cet objet, son retournement et son placement dans le second emplacement soient effectués en amont de l'équipement, par exemple à proximité de la première position, juste avant le placement d'un nouvel objet dans le premier emplacement.

Avantageusement, le second équipement de manipulation est placé de façon à manipuler les objets portés par la navette quand la navette est dans la seconde position.

Ainsi, le retrait de l'objet du second emplacement se fait en aval des équipements de traitement. Ce retrait peut être suivi de l'envoi de l'objet vers un autre équipement. Il peut également être suivi immédiatement du placement de l'objet dans un troisième emplacement de la navette, par exemple dans une position telle qu'il puisse présenter une troisième face à l'équipement de traitement. La navette peut ainsi présenter un nombre d'emplacements au moins égal au nombre de faces à traiter d'un objet, un même objet occupant successivement ces emplacements pour que ses faces soient traitées.

Il est également possible, dans d'autres modes de réalisation, que ce retrait se fasse à d'autres positions. Il est par exemple possible que, après un passage en regard des équipements de traitement, la navette revienne vers sa première position avec l'objet contenu dans son second emplacement, et que le retrait de cet objet soit effectué en amont de l'équipement, par exemple à proximité de la première position, juste avant le placement dans le second emplacement de l'objet provenant du premier emplacement.

Avantageusement, l'équipement de traitement comprend au moins une imprimante apte à imprimer sur une face d'un objet, qui peut être du type « *drop on demand* »*.*

Avantageusement, les emplacements sont disposés, par rapport à la navette, de façon à passer successivement en regard du ou des équipements de traitement, lors du déplacement de la navette entre la première position et la seconde position.

Les équipements de traitement peuvent ainsi être choisis pour effectuer leur traitement sur une largeur n'excédant pas la largeur maximale d'un objet à traiter, ce qui réduit le coût de tels équipements.

Il est cependant possible, dans une variante, que les équipements choisis puissent effectuer leur traitement sur une largeur correspondant à la largeur de plusieurs objets à traiter. Dans ce cas, plusieurs emplacement peuvent être prévus de front sur la navette. Il peut ainsi être possible que la navette présente plusieurs premiers emplacements placés de front et plusieurs seconds emplacements placés de front, ou que le premier emplacement et le second emplacement soient placés de front.

Dans un mode de réalisation avantageux, les emplacements sont disposés, par rapport à la navette, de façon à ce que le second emplacement passe en regard de l'équipement de traitement avant le premier emplacement lors du déplacement de la navette depuis la première position vers la seconde position.

Dans ce mode de réalisation, il est ainsi possible, si la navette ne présente qu'un premier emplacement et un second emplacement, que les deux faces traitées d'un même objet soient traitées successivement, sans qu'une face d'un autre objet soit traitée entre les deux faces du même objet.

Avantageusement, les premier et second emplacements sont aptes chacun à recevoir un objet plat placé en position sensiblement horizontale, en laissant apparente la face supérieure de l'objet.

Dans ce cas, l'équipement permet de traiter les deux faces sensiblement opposées de cet objet, la face supérieure, tournée vers le haut, pouvant être traitée par le ou les équipements de traitement.

Avantageusement, la navette est mobile en translation, entre la première position et la seconde position, le long d'au moins un rail de guidage.

La navette effectue ainsi des allers-retours le long de ce rail entre sa première position et sa seconde position.

Bien entendu, la navette peut être entrainée, dans ses allers-retours entre ces positions, par des moyens d'entrainement adaptés, tels qu'un moteur ou un vérin.

Selon un mode de réalisation avantageux, le dispositif comprend un manipulateur comprenant une pince constituant le second équipement de manipulation et une pince constituant le troisième équipement de manipulation.

Selon un mode de réalisation avantageux, la navette est un chariot dans lequel sont définis les emplacements, le chariot étant apte à porter les objets placés dans ces emplacements.

Ce mode de réalisation permet un déplacement facile des objets, qui sont portés par la navette et ne sont alors en contact avec aucune autre surface. Il est cependant possible également que les objets se déplacent le long d'un chemin. La navette, dans ce cas, ne porte pas nécessairement les objets placés dans les emplacements, mais les pousse. Les objets continuent, dans un tel mode de réalisation, à se déplacer avec la navette.

De façon avantageuse, dans le dispositif de traitement d'objet selon l'invention, le premier équipement de manipulation est configuré pour placer un objet dans un premier des emplacements, quand la navette est dans la première position, le second équipement de manipulation est configuré pour retirer un objet placé dans le second emplacement, et le troisième équipement de manipulation est configuré pour retirer un objet placé dans le premier emplacement et le tourner avant de le placer dans le second emplacement.

Au moins certains des objectifs peuvent également être atteints à l'aide d'un dispositif de traitement des deux faces opposées de cartes, comprenant au moins un équipement de traitement apte à effectuer un traitement sur une face de cartes présentée en regard dudit équipement de traitement, ce dispositif comprenant également, selon l'invention,
- une navette présentant au moins deux emplacements adaptés pour recevoir des cartes en position sensiblement horizontale, la navette étant montée mobile entre une première position et une seconde position, en passant par des positions intermédiaires dans lesquelles elle présente une face des cartes placées dans les emplacements en regard du ou des équipements de traitement ;
- un premier équipement de manipulation, apte à placer une carte dans un premier des emplacements, une première face tournée vers le haut, quand la navette est dans la première position ;
- un second équipement de manipulation apte à retirer une carte placée dans le second emplacement ; et
- un troisième équipement de manipulation apte à retirer une carte placée dans le premier emplacement, une première face tournée vers le haut, et à la placer dans le second emplacement, sa seconde face tournée vers le haut.

Ainsi, l'équipement permet de traiter successivement, avec le même ou les mêmes équipements de traitement, les deux faces de cartes. Une telle solution est très avantageuse par rapport aux solutions connues de l'art antérieur pour traiter les deux faces de cartes, qui nécessitaient l'usage d'équipements de traitement différents pour chaque face. Elle est également avantageuse par rapport à la solution connue mettant en œuvre un trajet de retour encombrant, visant à faire passer deux fois une même carte sous les mêmes équipements de traitement. Elle permet par ailleurs que le traitement des deux faces des cartes soit effectué avec une cadence rapide.

De façon avantageuse, dans ce dispositif de traitement des deux faces opposées de cartes, le premier équipement de manipulation est configuré pour placer une carte dans un premier des emplacements, quand la navette est dans la première position, le second équipement de manipulation est configuré pour retirer une carte placée dans le second emplacement, et le troisième équipement de manipulation est configuré pour retirer une carte placée dans le premier emplacement et la tourner avant de la placer dans le second emplacement.

Avantageusement, le troisième équipement de manipulation est placé de façon à manipuler les cartes portées par la navette quand la navette est dans la seconde position.

Ainsi, le déplacement et le retournement de la carte du premier emplacement vers le second emplacement se fait en aval des équipement de traitement. Il est également possible, dans d'autres modes de réalisation, que ce retournement se fasse à d'autres positions.

Avantageusement, le second équipement de manipulation est placé de façon à manipuler les cartes portées par la navette quand la navette est dans la seconde position.

Ainsi, le retrait de la carte du second emplacement se fait en aval des équipements de traitement.

Il est également possible, dans d'autres modes de réalisation, que le second et/ou le troisième équipement de manipulation soient placés à d'autres positions. Il est par exemple possible qu'un même manipulateur comprenne le premier, le second et le troisième équipement de manipulation, qui peuvent effectuer leurs manipulations quand la navette est dans sa première position. Dans ce cas, ce manipulateur retire la carte du second emplacement, place dans ce second emplacement, en position retournée, la carte provenant du premier emplacement, et place une nouvelle carte dans le premier emplacement, ces manipulations pouvant être réalisées simultanément ou quasi-simultanément.

Dans ce mode de réalisation, la cadence de traitement peut être améliorée. En effet, la navette n'a plus besoin de stationner dans sa seconde position, en aval de l'équipement de traitement. Après son passage en regard des équipements de traitement, elle peut revenir immédiatement vers sa première position.

Avantageusement, les équipements de traitement comprennent au moins une imprimante apte à imprimer sur une face d'une carte, cette imprimante pouvant être du type « *drop on demand* »*.*

Une telle imprimante permet une personnalisation des faces de chaque carte, même si ces cartes circulent en regard de l'imprimante à une vitesse importante.

Avantageusement, les emplacements sont disposés, par rapport à la navette, de façon à passer successivement en regard du ou des équipements de traitement, lors du déplacement de la navette entre la première position et la seconde position.

Ainsi, les équipements de traitement, par exemple les imprimantes, peuvent être choisis pour ne traiter que la largeur d'une carte.

Avantageusement, les emplacements sont disposés, par rapport à la navette, de façon à ce que le second emplacement passe en regard du ou des équipements de traitement avant le premier emplacement lors du déplacement de la navette depuis la première position vers la seconde position.

Ainsi, si les équipements de traitement n'effectuent de traitement que lors du déplacement de la navette depuis sa première position vers sa seconde position, les deux faces d'une même carte sont traitées successivement, sans qu'une face d'une autre carte soit traitée entre la première face et la seconde face d'une même carte.

Avantageusement, la navette est mobile en translation, entre la première position et la seconde position, le long d'au moins un rail de guidage.

Bien entendu, la navette peut être entrainée, dans ses allers-retours entre ces positions, par des moyens d'entrainement adaptés, tels qu'un moteur ou un vérin.

Selon un mode de réalisation avantageux, le dispositif comprend un manipulateur comprenant une pince constituant le second équipement de manipulation et une pince constituant le troisième équipement de manipulation.

Avantageusement, la navette est un chariot dans lequel sont définis les emplacements, le chariot étant apte à porter les cartes placées dans ces emplacements dans une position sensiblement horizontale.

Au moins certains des objectifs peuvent également être atteints selon l'invention à l'aide d'un procédé de traitement de plusieurs faces d'objets, comprenant :
- une étape de placement d'un premier objet dans un premier emplacement prévu dans une navette, la navette présentant un second emplacement comprenant un second objet ;
- une étape de déplacement de la navette le long d'une trajectoire au cours de laquelle une face de chacun des premier et second objets passe en regard d'un équipement de traitement apte à effectuer un traitement sur ladite face ;
- une étape de déchargement dudit second objet dudit second emplacement ;
- une étape de déchargement dudit premier objet dudit premier emplacement, de retournement dudit premier objet, et de placement dudit premier objet, dans une position retournée, dans ledit second emplacement.

Ces étapes peuvent se répéter plusieurs fois, pour permettre le traitement de plusieurs faces de plusieurs objets. Elle peuvent être mises en œuvre successivement. Cependant, dans un mode de réalisation avantageux, les deux étapes de déchargement peuvent également être mises en œuvre simultanément, ou quasi-simultanément. Il est également possible, dans un autre mode de réalisation avantageux, que les deux étapes de déchargement soient mises en œuvre simultanément, ou quasi-simultanément, à la mise en œuvre d'une nouvelle étape de placement d'un nouvel objet dans le premier emplacement de la navette.

Un tel procédé peut présenter, isolément ou en combinaison, les caractéristiques additionnelles qui sont décrites dans la présente description, en lien avec l'un ou l'autre des modes de réalisation.

Au moins certains des objectifs peuvent également être atteints selon l'invention à l'aide d'un procédé de traitement des deux faces opposées d'une carte, comprenant :
- une étape de placement d'une première carte dans un premier emplacement prévu dans une navette, la navette présentant un second emplacement comprenant une seconde carte ;
- une étape de déplacement de la navette le long d'une trajectoire au cours de laquelle une face de chacune des première et seconde cartes passe en regard d'un équipement de traitement apte à effectuer un traitement sur ladite face ;
- une étape de déchargement de la seconde carte du second emplacement,
- une étape de déchargement de la première carte du premier emplacement, de retournement et de placement de la première carte, dans une position retournée, dans le second emplacement.

Ces étapes peuvent se répéter plusieurs fois, pour permettre le traitement de plusieurs faces de plusieurs objets. Un tel procédé peut présenter, isolément ou en combinaison, les caractéristiques additionnelles qui sont décrites dans la présente description, en lien avec l'un ou l'autre des modes de réalisation.

Au moins certains des objectifs peuvent également être atteints selon l'invention à l'aide d'un procédé de traitement, par un équipement de traitement, des faces d'objets, comprenant successivement :
- une étape de traitement d'au moins une première face d'un second objet et une seconde face d'un premier objet dont la première face a été traitée précédemment, au cours du passage dans un premier sens desdites première face dudit second objet et seconde face dudit premier objet en regard dudit équipement de traitement, lesdits premier objet et second objet étant entrainés par une navette,
- une étape de passage dans un second sens, opposé audit premier sens, dudit second objet en regard dudit équipement de traitement, ledit second objet étant entraîné par ladite navette,
- une étape de traitement d'au moins une première face d'un troisième objet et la seconde face dudit second objet, au cours du passage dans ledit premier sens desdites première face dudit troisième objet et seconde face dudit second objet en regard dudit équipement de traitement, lesdits second objet et troisième objet étant entraînés par ladite navette,
- une étape de passage dans ledit second sens dudit troisième objet en regard dudit équipement de traitement, ledit troisième objet étant entraîné par ladite navette.

Ces étapes peuvent se répéter plusieurs fois, pour permettre le traitement de plusieurs faces de plusieurs objets. Un tel procédé peut présenter, isolément ou en combinaison, les caractéristiques additionnelles qui sont décrites dans la présente description, en lien avec l'un ou l'autre des modes de réalisation.

### Liste des figures

L'invention sera mieux comprise à la lecture de la description suivante d'un mode de réalisation préférentiel, donnée à titre de simple exemple figuratif et non limitatif, et accompagnée de figures parmi lesquelles :
- La figure 1 est une vue en perspective d'un dispositif de traitement des deux faces de cartes, selon un mode de réalisation de l'invention, dans une première position ;
- La figure 2 est une vue de détail, en perspective, d'une partie du dispositif de traitement de la figure 1, dans la première position ;
- La figure 3 est une vue de détail de la partie du dispositif de traitement représenté à la figure 2, dans une seconde position ;
- La figure 4 est une vue en perspective du dispositif de traitement de la figure 1, dans une troisième position ;
- La figure 5 est une vue de détail d'une partie du dispositif de traitement dans la troisième position ;
- La figure 6 est une vue de détail de la partie du dispositif de traitement représenté par la figure 5, dans une quatrième position ;
- La figure 7 est une vue de détail de la partie du dispositif de traitement représenté par la figure 5, dans une cinquième position ;
- La figure 8 est une vue de détail de la partie du dispositif de traitement représenté par la figure 5, dans une sixième position ;
- La figure 9 est une vue de détail de la partie du dispositif de traitement représenté par la figure 5, dans une septième position ;
- La figure 10 est une vue de détail de la partie du dispositif de traitement représenté par la figure 5, dans une huitième position ;
- La figure 11 est une vue schématique montrant un dispositif de traitement de quatre faces d'un objet parallélépipédiques, selon un autre mode de réalisation possible de l'invention, dans une première position ;
- La figure 12 est une vue schématique du dispositif de traitement de la figure 11 dans une deuxième position ;
- La figure 13 est une vue schématique du dispositif de traitement de la figure 11 dans une troisième position ;
- La figure 14 est une vue schématique du dispositif de traitement de la figure 11 dans une quatrième position ;
- La figure 15 est une vue schématique du dispositif de traitement de la figure 11 dans une cinquième position ;
- La figure 16 est une vue schématique, en perspective, montrant un dispositif de traitement selon un autre mode de réalisation possible de l'invention,
- La figure 17 est une vue schématique, en perspective, montrant une partie d'un dispositif de traitement selon un autre mode de réalisation possible de l'invention.

### Description détaillée de modes de réalisation de l'invention

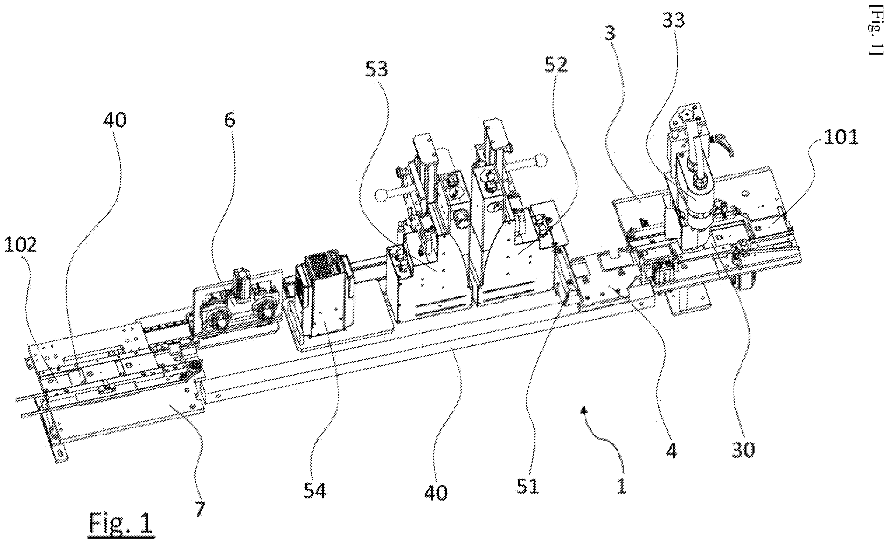

La [Fig.1] est une vue en perspective d'un dispositif de traitement de plusieurs faces d'un objet selon un mode de réalisation de l'invention, spécialement adapté au traitement des deux faces opposées de cartes. Ce dispositif est destiné à être intégré dans une chaine de personnalisation de cartes, qui peut également comprendre, par exemple, un ou plusieurs dispositifs de programmation des cartes.

Dans le mode de réalisation représenté, ce dispositif de traitement de cartes 1 permet d'imprimer les deux faces des cartes.

Le dispositif de traitement de cartes 1 comprend une pluralité de convoyeurs qui permettent de déplacer une carte depuis une position d'entrée 101 jusqu'à une position de sortie 102. Le long du trajet qu'effectuent les cartes dans ce dispositif de traitement, les éléments plus proches de la position d'entrée 101 seront considérés, dans la présente description, comme « en amont » des éléments plus proches de la position de sortie 102. Inversement, les éléments plus proches de la position de sortie 102 seront considérés comme « en aval » des éléments situés plus proches de la position d'entrée 101.

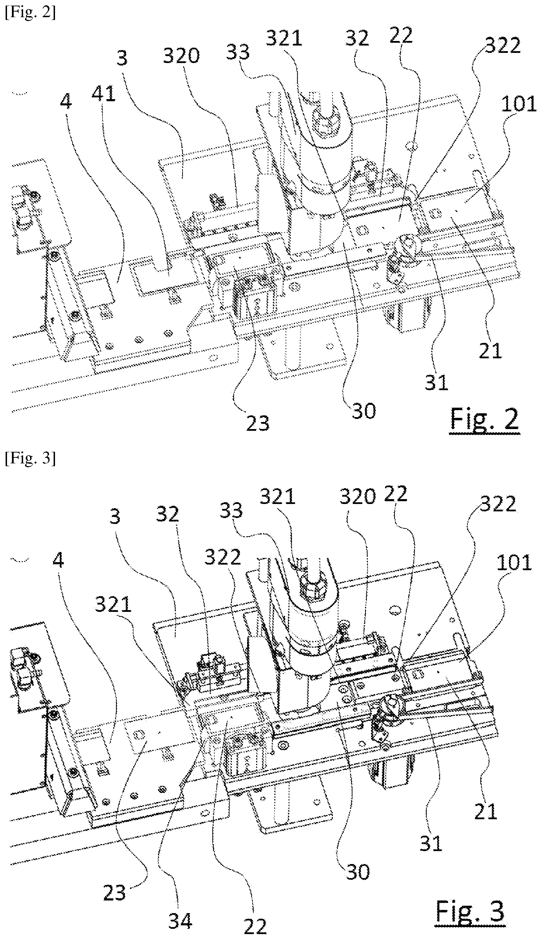

Les figures 2 et 3 représentent en vue de détail le plateau d'entrée 3, qui constitue la partie du dispositif de traitement de cartes 1 sur laquelle se trouve la position d'entrée 101. Les cartes peuvent se déplacer sur ce plateau d'entrée 3 en suivant un chemin de carte 30, dans lequel elles sont maintenues sur une trajectoire sensiblement rectiligne par des bordures latérales. La position d'entrée 101 constitue une position du chemin de carte 30 située au niveau d'un bord du plateau 3, le reste du chemin de carte 30 étant situé en aval de cette position d'entrée 101. Le chemin de carte 30 est conçu pour que les cartes s'y déplacent dans une position sensiblement horizontale, une de leurs faces étant tournée vers le haut.

Sur la [Fig.2], une carte 21 est placée dans cette position d'entrée 101. Elle est amenée dans cette position, par exemple depuis un autre équipement de traitement, par une courroie à ergots 31, dont les ergots poussent les cartes vers le chemin de carte 30. Depuis la position d'entrée 101, la courroie à ergots 31 peut encore pousser les cartes vers l'aval dans le chemin de carte 30, jusqu'à la position dans laquelle se trouve, sur la [Fig.2], une carte 22.

Le plateau d'entrée 3 porte une fourche d'entrainement 32, qui peut coulisser le long d'un rail 320 parallèle au chemin de cartes 30. Elle est avantageusement entrainée le long de ce rail, dans un sens ou dans l'autre, par un moteur, un vérin, ou tout autre moyen d'entrainement connu de l'homme du métier, qui ne sera pas décrit plus en détail. Cette fourche d'entraînement 32 est également mobile, dans une direction verticale, entre une position haute, dans laquelle elle peut se déplacer le long du rail 320 sans entrer en contact avec les cartes placées dans le chemin de cartes 30, et une position basse, dans laquelle ses doigts 321 et 322 entrent en contact avec les bords avant et arrière des cartes situées dans le chemin de cartes 30.

Ainsi, dans la position représentée par la [Fig.2], la fourche d'entrainement 32 est située à l'extrémité amont du rail 320, qui est la plus proche de la position d'entrée 101. Cette fourche d'entrainement 32 est dans sa position basse, de telle sorte que son doigt 321 et son doigt 322 entourent les bords avant et arrière de la carte 22. Tant que la fourche d'entrainement 32 reste dans cette position basse, elle peut donc entrainer la carte 22 en translation, en se déplaçant le long du rail 320.

Ainsi, la [Fig.3] représente le plateau d'entrée sur lequel la fourche d'entrainement 32 s'est déplacée le long du rail 320 jusqu'à l'extrémité aval de celui-ci, en entrainant la carte 22 le long du chemin de carte 30.

Au cours de ce déplacement, la fourche d'entrainement 32 fait passer la carte 22 sous un équipement de traitement de la carte qui est, dans le mode de réalisation, un équipement de traitement par plasma 33, qui projette un faisceau de plasma sur une face de la carte pour y éliminer la tension de surface, et ainsi améliorer l'adhérence de l'encre. Cet équipement de traitement par plasma est apte à traiter la face de chaque carte qui est tournée vers le haut, ici la première face de la carte 22.

À l'issue de ce déplacement, la carte 22 est amenée par la fourche d'entraînement 32 jusqu'à la position représentée par la [Fig.3], qui constitue l'extrémité aval du chemin de carte 30 sur le plateau d'entrée 3, à l'opposé de la position d'entrée 101. Dans cette position, la carte 22 est placée dans une roue de retournement 34 dans laquelle est définie une portion du chemin de carte 30. Cette roue de retournement 30 est apte à retourner la carte 22, en tournant d'un demi-tour autour d'un axe horizontal perpendiculaire à la direction du chemin de carte.

Après ce retournement, la carte 22 est en position retournée, tout en restant dans le chemin de carte 30 et maintenue entre les doigts 321 et 322 de la fourche d'entraînement 32. Quand la roue de retournement 34 a ainsi retourné la carte 22, la fourche d'entrainement 32 peut de nouveau se déplacer vers l'aval, le long du rail 320, en entrainant la carte 22 retournée, afin de faire passer cette carte une seconde fois sous l'équipement de traitement plasma 33. Ce nouveau passage permet que l'équipement de traitement plasma 33 traite la seconde face de la carte 22.

Après ce second passage de la carte sous l'équipement de traitement plasma 33, la fourche d'entrainement 32 ramène la carte 22 dans la roue de retournement 34. La roue de retournement 34 peut de nouveau retourner la carte 22, afin que sa première face soit de nouveau tournée vers le haut.

À ce moment, la fourche d'entrainement 32 se déplace dans une position relevée, dans laquelle ses doigts 321 et 322 n'entourent plus les bords de la carte 22. Dans cette position relevée, la fourche d'entrainement 32 se déplace le long du rail 320 sans entrainer la carte 22. Elle peut retourner vers l'extrémité amont du rail 320 pour aller entrainer une nouvelle carte, par exemple la carte 21 située immédiatement en aval de la carte 22. Pour entrainer cette nouvelle carte, la fourche d'entrainement 32 est de nouveau déplacée dans sa position basse, dans laquelle les doigts 321 et 322 entourent les bords de la carte 21.

Quand la fourche d'entrainement 32 amène cette nouvelle carte 21 vers la roue de retournement 34, son doigt 321 repousse hors de cette roue de retournement 34 la carte 22 qui y était placée précédemment. La carte 22 est ainsi poussée hors du plateau d'entrée 3, dans un premier emplacement de carte défini sur un chariot 4 qui est situé, à ce moment, à côté du plateau d'entrée 3, dans le prolongement du chemin de cartes 30. Ce mouvement est identique à celui qui est représenté par les figures 2 et 3 pour la carte 23, qui est dans la roue de retournement 34 dans la position représentée par la [Fig.2], et qui est repoussée par le doigt 321 vers le premier emplacement 41 du chariot 4 dans la position représentée par la [Fig.3]. La fourche d'entrainement 32 constitue donc un premier équipement de manipulation, apte à placer une carte dans un premier emplacement du chariot, ou navette 4.

Le chariot 4, encore appelé navette 4, est monté coulissant le long d'un rail 40 s'étendant horizontalement, parallèlement à la direction du chemin de cartes 30. Il est avantageusement entrainé le long de ce rail, dans un sens ou dans l'autre, par un moteur, un vérin, ou tout autre moyen d'entrainement connu de l'homme du métier, qui ne sera pas décrit plus en détail. Ce chariot 4 présente avantageusement deux emplacements 41 et 42, destinés chacun à recevoir une carte dans une position horizontale, l'une de ses faces étant tournée vers le haut. Sur ce chariot 4, le premier emplacement 41 est situé en amont du second emplacement 42.

Quand la fourche d'entrainement 32 repousse la carte 22 en dehors du plateau 3, le chariot 4 est situé à l'extrémité amont du rail 40, afin que son premier emplacement 41 soit placé dans le prolongement du chemin de cartes 30 pour recevoir la carte repoussée par la fourche d'entrainement 32. A ce moment, le second emplacement 42 du chariot 4 est occupé par la carte 23, qui est placée dans ce second emplacement en position retournée, sa seconde face étant tournée vers le haut.

Une fois la carte 22 en place dans l'emplacement 41, le chariot 4 se déplace le long du rail 40 vers l'extrémité aval de celui-ci. Au cours de ce déplacement, les emplacements 42 et 41, et donc les cartes 23 et 22 placées dans ces emplacements, passent successivement sous des équipements de traitement aptes à appliquer un traitement sur les faces des cartes 23 et 22 qui sont tournées vers le haut.

Parmi ces équipements de traitement, on peut voir sur la [Fig.1] un ioniseur 51 destiné à éliminer l'électricité statique sur la surface des cartes, un premier équipement d'impression 52, un second équipement d'impression 53, et un équipement de séchage d'encre par rayonnement ultraviolet 54. Ces équipements permettent d'appliquer les traitements souhaités sur la face tournée vers le haut des cartes qui sont placées dans les emplacements 41 et 42 du chariot. En l'occurrence, dans le mode de réalisation représenté, ils permettent de réaliser une impression en deux couleurs sur la première face de la carte 22 et sur la seconde face de la carte 23.

Les équipements d'impression 52 et 53, qui sont représentés schématiquement sur la [Fig.1], constituent les équipements de traitement principaux de l'équipement de traitement 1. Ces équipements sont avantageusement des équipements à jet d'encre connus en eux-mêmes de l'homme du métier, qui projettent de l'encre sur la face tournée vers le haut des cartes circulant sous l'équipement d'impression. De tels équipements d'impression peuvent-être monochromes ou polychromes. Dans le cas représenté, les équipements d'impression 52 et 53 sont monochromes, chacun dans une couleur différente, et sont placés successivement pour imprimer en deux couleurs sur la face des cartes qui est tournée vers le haut. Ces équipements d'impression sont de préférence du type permettant de délivrer des gouttes d'encre à la demande. De tels équipements sont usuellement désignés par l'expression anglaise « drop on demand » ou par l'acronyme « DOD ».

Il est à noter que, dans d'autres modes de réalisation de l'invention, il est possible de mettre en œuvre, dans le dispositif de traitement 1, d'autres équipements de traitement. Il est possible, par exemple, que l'équipement de traitement soit un équipement de gravage laser, de dépôt d'étiquette sur une face de la carte, ou de vernissage d'une face de la carte.

De façon avantageuse, ces équipements de traitement sont capables de réaliser le traitement en continu, c'est à dire qu'ils peuvent effectuer leur traitement sur une face d'une carte circulant à une vitesse constante, sans qu'il n'y ait besoin d'arrêter ou de ralentir le chariot assurant la circulation des cartes pour effectuer le traitement.

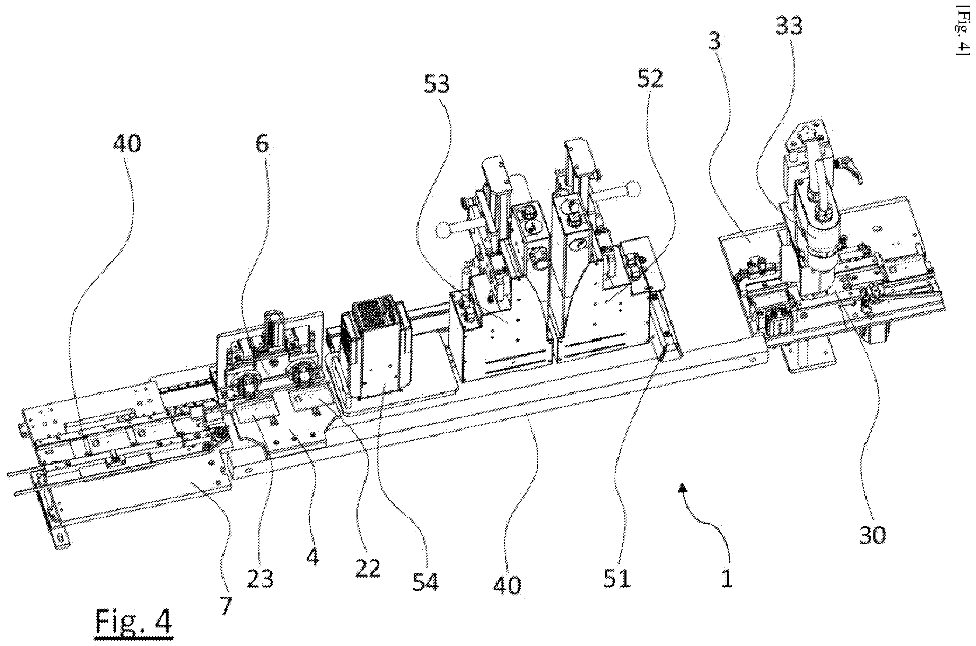

La [Fig.4] représente l'équipement de traitement 1 dans lequel le chariot 4 est dans sa position aval, après avoir parcouru le rail 40 jusqu'à son extrémité aval, en faisant passer les cartes 23 et 22 sous les équipements de traitement et d'impression 51 à 54. La carte 22 qui est dans le premier emplacement 41 présente alors sa première face, tournée vers le haut et visible sur la figure, imprimée par les équipements d'impression. La carte 23 qui est dans le second emplacement présente sa seconde face, tournée vers le haut et visible sur la figure, imprimée par les équipements d'impression.

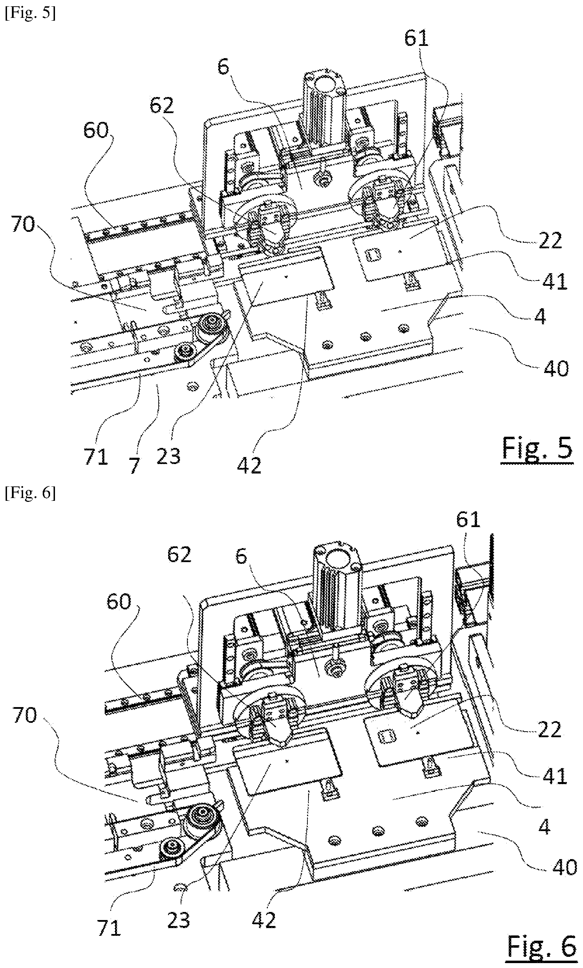

Quand le chariot 4 est dans cette position aval, comme le représentent les figures 5 à 10, il est situé en face d'un manipulateur 6. Ce manipulateur 6 présente deux pinces 61 et 62 constituant chacune un équipement de manipulation, et qui, dans la position du manipulateur 6 représentée par la [Fig.5], sont respectivement en regard des emplacements 41 et 42 du chariot 4. Les pinces 61 et 62 sont mobiles, ensemble, en translation, selon une direction perpendiculaire à la direction du rail 40, entre la position représentée par la [Fig.5] dans laquelle les pinces 61 et 62 sont en regard des emplacements 41 et 42, et la position représentée par la [Fig.6], dans laquelle les pinces 61 et 62 sont avancées vers le chariot 4 et saisissent respectivement les cartes 22 et 23 placées dans les emplacements 41 et 42.

Il est à noter que le chariot 4 présente des encoches spécialement destinées à permettre cette avancée des pinces 61 et 62. Dans la situation représentée par la [Fig.6] , la pince 61 saisit la carte 22 placée dans l'emplacement 41, et la pince 62 saisit la carte 23 placée dans l'emplacement 42.

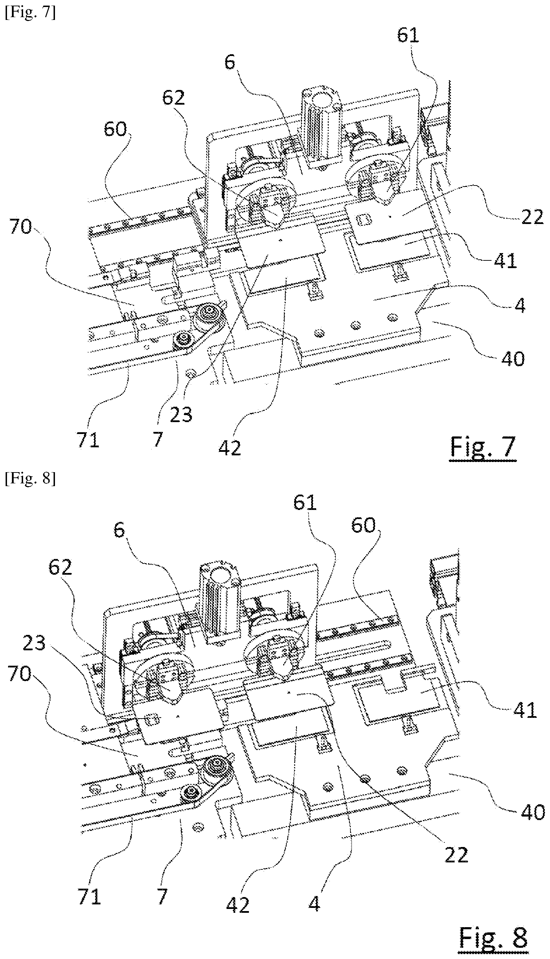

Après avoir saisi les cartes présentes dans les emplacements 41 et 42, les pinces 61 et 62 se déplacent vers le haut, afin de sortir les cartes des emplacements 41 et 42, comme le représente la [Fig.7]. Chacune de ces pinces 61 et 62 pivote alors sur elle-même d'un demi-tour, autour d'un axe horizontal orthogonal à la direction du rail 40. Ce pivotement a pour effet de retourner les cartes tenues par les pinces 61 et 62.

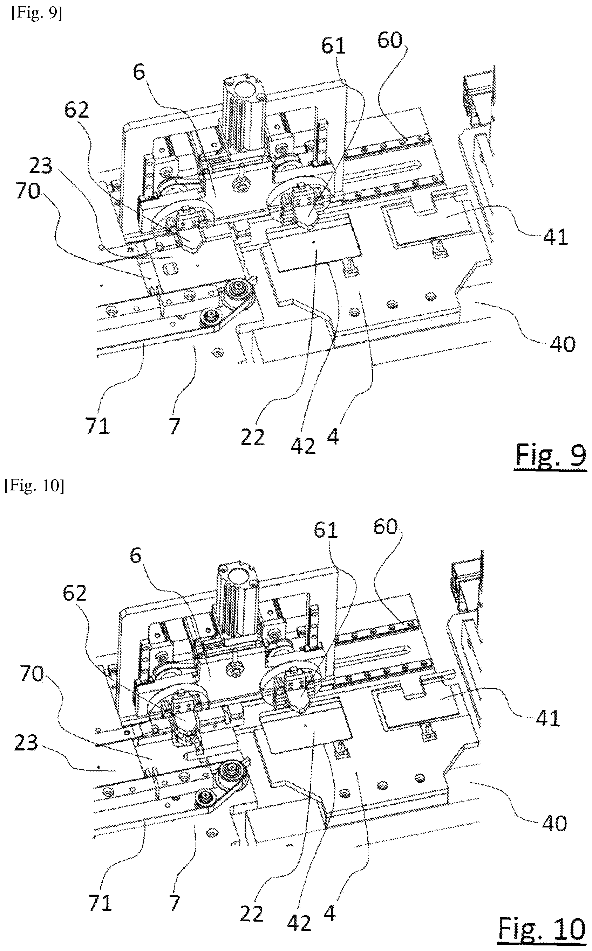

Pendant ce pivotement, l'ensemble du manipulateur 6 se déplace, le long d'un rail 60 parallèle au rail 40, jusqu'à ce que la pince 61 soit située au-dessus de l'emplacement 42, comme le représente la [Fig.8]. Les pinces 61 et 62 sont alors déplacées vers le bas jusqu'à la position représentée par la [Fig.9], ce qui a pour effet de placer la carte 22, maintenue par la pince 61, dans l'emplacement 42. Ce mouvement permet également à la pince 62 de déposer la carte 23 sur un chemin de cartes 70 d'un plateau de sortie 7, qui est voisin du chariot 4 quand celui-ci est dans sa position aval.

Sur le plateau 7, une courroie à ergots 71 permet d'entraîner la carte 23 dans le chemin de cartes 70 vers la position de sortie 102, à l'extrémité aval du plateau 7, comme le représente la [Fig.10]. Depuis cette position de sortie 102, les cartes peuvent être entraînées pour subir d'autres traitements, être stockées ou être envoyées.

Les pinces 61 et 62 effectuent alors un mouvement de translation horizontale les éloignant du chariot 4 et du chemin de cartes 70. Les pinces 61 et 62 lâchent alors les cartes qu'elles portaient, qui sont respectivement retenues par les bords de l'emplacement 42 et les bords du chemin de cartes 70. À l'issue de la manipulation effectuée par le manipulateur 6, la carte 22 qui était dans le premier emplacement 41 du chariot 4 est placée, en position retournée, dans le second emplacement 42 de ce chariot, et la carte 23 qui était dans le second emplacement 42 du chariot 4 est placée, en position retournée, dans le chemin de cartes 70 du plateau de sortie 7.

Ainsi, la pince 61 constitue un équipement de manipulation apte à retirer la carte placée dans le second emplacement 42, et la pince 62 constitue un équipement de manipulation apte à retirer la carte placée dans le premier emplacement 41 et à la tourner avant de la placer dans le second emplacement 42.

Le chariot 4, dont le premier emplacement 41 est désormais vide, se déplace de nouveau jusqu'à sa position amont. Lors de ce déplacement, il passe sous les équipements 54 à 51, mais ces équipements n'effectuent de préférence aucun traitement.

Quand le chariot 4 est de nouveau dans sa position amont, à l'extrémité amont du rail 40, il est voisin du plateau d'entrée 2, et peut recevoir dans son emplacement 41 une nouvelle carte 21, poussée par la fourche d'entrainement 32 hors du plateau d'entrée 3.

Le chariot 4, contenant alors la carte 22 dans le second emplacement 42 et la carte 21 dans le premier emplacement 41, peut de nouveau se déplacer le long de son rail 40 vers sa position aval, en passant sous les équipements de traitement 51 à 54. Ces équipements de traitement effectuent alors leur traitement, en l'occurrence une impression, sur les faces tournées vers le haut des cartes 21 et 22 contenues dans les emplacements 41 et 42. Pour la carte 22, cette face imprimée est la seconde face, opposée à la première face qui a été imprimée précédemment.

Au cours de ce nouveau passage du chariot 4, les équipements de traitement impriment donc successivement sur la seconde face de la carte 22, dont la première face qui a été imprimée précédemment, puis sur une première face de la nouvelle carte 21.

À l'issue de ce nouveau passage, quand le chariot 4 parvient à sa position aval, le manipulateur 6 saisit la carte 21 placée dans le premier emplacement 41 pour la placer, en position retournée, dans le second emplacement 42, et saisit simultanément la carte 22 dont les deux faces ont été imprimées, pour la placer sur le chemin de cartes 70 du plateau de sortie 7.

Le chariot 4, qui comprend deux emplacements pouvant chacun contenir une carte, permet ainsi de réaliser le traitement des deux faces d'une même carte avec les mêmes équipements d'impression. En faisant passer sous les équipements de traitement les deux cartes très proches l'une de l'autre, il permet d'obtenir une bonne cadence de traitement. Il est à noter par ailleurs que le traitement de la seconde face de chaque carte est réalisé par les équipements de traitement immédiatement après le traitement de sa première face, avant le traitement d'une face d'une autre carte.

Si le mode de réalisation décrit ci-dessus représente un dispositif spécialement adapté au traitement des deux faces d'une carte, il est possible de mettre en œuvre l'invention pour le traitement de tout type d'objets, présentant au moins deux faces opposées ou non.

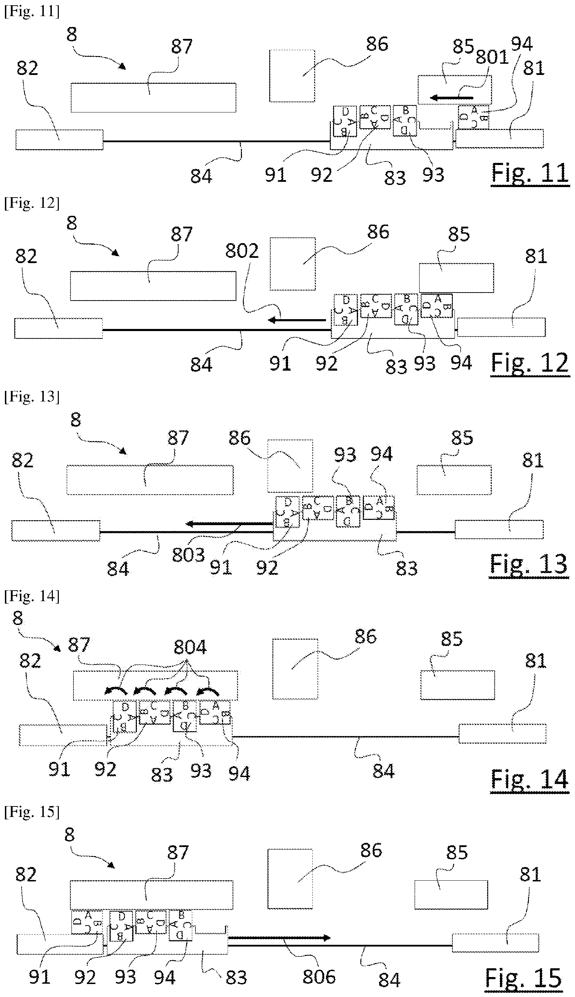

Les figures 11 à 15 représentent ainsi, de façon schématique, un dispositif de traitement 8 selon un autre mode de réalisation, capable de traiter plusieurs faces d'un objet de forme parallélépipédique.

Ce dispositif comprend un équipement d'entrée 81 et un équipement de sortie 82. Un chariot 83, ou navette 83, peut se déplacer, le long d'un rail 84, entre une position amont représentée par les figures 11 et 12 et une position aval représentée par les figures 14 et 15.

Le chariot 83 présente quatre emplacements destinés à recevoir des objets identiques, 91 à 94, dans des positions différentes.

Ainsi, dans la configuration représentée par les figures 12 à 14, un objet 94 est placé dans un premier emplacement dans une position telle que sa face marquée « A » soit tournée vers le haut et, dans la configuration représentée par les figures 11 à 14,
- un objet 93 est placé dans un deuxième emplacement dans une position telle que sa face marquée « B » soit tournée vers le haut,
- un objet 92 est placé dans un troisième emplacement dans une position telle que sa face marquée « C » soit tournée vers le haut,
- un objet 91 est placé dans un quatrième emplacement dans une position telle que sa face marquée « D » soit tournée vers le haut.

Dans la configuration représentée par la [Fig.11], l'objet 94 est placé sur l'équipement d'entrée 81, et le chariot 83 est dans sa position amont, proche de l'équipement d'entrée 81. Un premier équipement de manipulation 85, dont le fonctionnement n'est pas exposé en détail, permet de déplacer l'objet 94, comme le représente schématiquement la flèche 801, jusqu'au premier emplacement du chariot 83, qui était précédemment vide.

Dans cette configuration représentée par la [Fig.12], chacun des quatre emplacements du chariot 83 contient un objet. Le chariot 83 peut alors se déplacer vers sa position aval comme le représente schématiquement la flèche 802. Au cours de son déplacement, comme le représente la [Fig.13], il fait passer successivement chacun des objets portés dans ses emplacements sous un équipement de traitement 86, capable d'appliquer un traitement sur la face des objets 91 à 94 qui est tournée vers le haut.

Le chariot poursuit ensuite son déplacement, comme le représente schématiquement la flèche 803, jusqu'à sa position aval représentée par la [Fig.14]. Dans cette position, les objets 91 à 94 sont situés sous un équipement de manipulation 87. Cet équipement de manipulation 87, dont le fonctionnement n'est pas exposé en détail, est conçu pour manipuler simultanément les objets 91 à 94 placés dans les emplacements du chariot 83, et les déplacer vers l'aval jusqu'à l'emplacement qui leur est adjacent, tout en les tournant d'un quart de tour, comme le représentent schématiquement les flèches 804.

À l'issue de cette manipulation, comme le représente la [Fig.15], l'objet 91 est posé sur l'équipement de sortie 82, les objets 92 à 94 occupent respectivement le quatrième, le troisième et le deuxième emplacements du chariot 83, et le premier emplacement du chariot 83 est libre. Ce chariot 83 peut alors se déplacer de nouveau vers sa position amont, comme le représente la flèche 806, pour recevoir un nouvel objet dans son premier emplacement et répéter les étapes précédemment décrites.

Un objet parcourant ce dispositif de traitement 8, depuis l'équipement d'entrée 81 jusqu'à l'équipement de sortie 82, effectuera donc quatre déplacements successifs, dans le chariot 83, depuis la position amont jusqu'à la position aval de ce chariot. Au cours de chacun de ces déplacements, cet objet passe sous l'équipement de traitement 86, en présentant vers le haut une de ses faces différentes. Le dispositif permet donc le traitement successif, par l'équipement de traitement 86, des quatre faces de l'objet.

Il est également possible, dans encore un autre mode de réalisation, qu'un chariot comprenne plusieurs emplacements constituant des premiers emplacements, destinés chacun à recevoir un objet provenant d'un équipement d'entrée, en amont du chariot de traitement, et plusieurs emplacements constituant des seconds emplacements, destinés chacun à recevoir un objet provenant d'un premier emplacement, après qu'il ait été retourné, par exemple en aval de l'équipement de traitement.

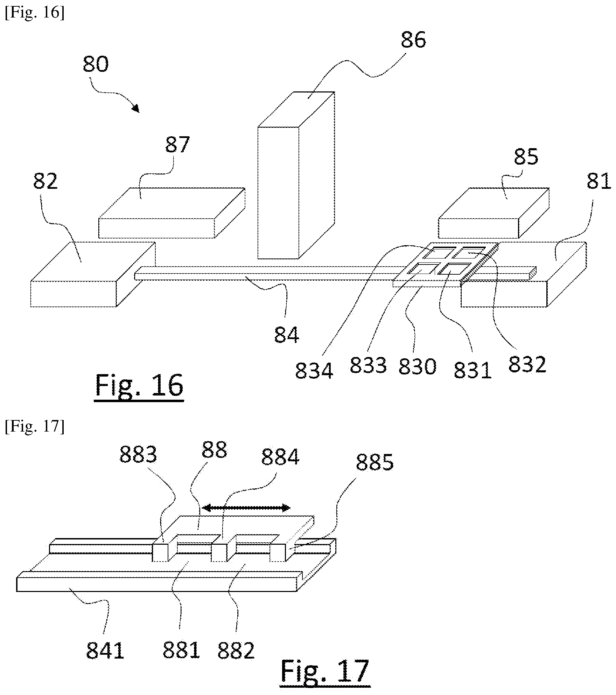

Ainsi, la [Fig.16] montre un dispositif de traitement 80 selon un autre mode de réalisation, capable de traiter deux faces d'objets. Ce dispositif comprend un équipement d'entrée 81 et un équipement de sortie 82. Un chariot 830, ou navette 830, peut se déplacer le long d'un rail 84, entre une position amont et une position aval, en passant sous un équipement de traitement 86.

Dans ce mode de réalisation, un premier équipement de manipulation 85 permet de placer simultanément sur le chariot 830 deux objets provenant de l'équipement d'entrée 81, l'un dans l'emplacement 831 et l'autre dans l'emplacement 832, quand ce chariot 830 est dans sa position amont. Les emplacements 831 et 832 sont alors tous les deux des premiers emplacements.

Quand le chariot 830 est en position aval, le second équipement de manipulation 87 permet de placer, en position retournée, dans l'emplacement 833 l'objet qui était dans l'emplacement 831 et dans l'emplacement 834 l'objet qui était dans l'emplacement 832. Les emplacements 833 et 834 sont alors tous les deux des seconds emplacements.

Dans ce mode de réalisation, l'équipement de traitement 86 est prévu pour pouvoir traiter les faces de tous les objets placés dans les emplacements du chariot 830, donc plusieurs objets circulant de front.

Dans les modes de réalisation représentés ci-dessus, la navette comprenant plusieurs emplacements est un chariot qui porte les objets qu'il déplace en regard d'un équipement de traitement. Il est également possible, dans d'autres modes de réalisation, qu'une navette entraine plusieurs objets dans plusieurs emplacements, sans les porter.

Ainsi, la [Fig.17] représente un segment d'un chemin 841 qui peut être utilisé pour déplacer des objets en regard de l'équipement de traitement. Une fourche 88 peut se déplacer le long de ce chemin 841. Elle présente trois doigts 883, 884 et 885, qui peuvent entrainer dans le chemin 841 les objets qu'elles entourent. La fourche 88 constitue donc une navette capable de déplacer simultanément deux objets, un premier objet dans un premier emplacement 882, entre le doigt 884 et le doigt 885, et un second objet dans un second emplacement 881, entre le doigt 883 et le doigt 884.

L'homme du métier pourra bien sûr imaginer d'autres types de navettes, pour mettre en œuvre l'invention.

## Revendications

1. Dispositif de traitement (1, 8, 80) de plusieurs faces d'objets, comprenant au moins un équipement de traitement (51, 52, 53, 54, 86) apte à effectuer un traitement sur une face d'un objet (21, 22, 23, 91, 92, 93, 94) présentée en regard dudit équipement de traitement ;
**caractérisé en ce qu'**il comprend également :
- une navette (4, 83, 88) présentant au moins deux emplacements (41, 42, 831, 832, 833, 834) adaptés pour recevoir des objets, ladite navette étant montée mobile entre une première position et une seconde position, en passant par des positions intermédiaires dans lesquelles elle présente une face des objets placés dans lesdits emplacements en regard dudit ou desdits équipements de traitement ;
- un premier équipement de manipulation (32, 85), apte à placer un objet dans un premier desdits emplacements (41), quand ladite navette est dans ladite première position ;
- un second équipement de manipulation (62) apte à retirer un objet placé dans le second desdits emplacements (42) ; et
- un troisième équipement de manipulation (61) apte à retirer un objet placé dans ledit premier emplacement (41) et à le tourner avant de le placer dans ledit second emplacement (42).

2. Dispositif de traitement de plusieurs faces d'objets selon la revendication précédente, **caractérisé en ce que** ledit troisième équipement de manipulation (61) est placé de façon à manipuler les objets portés par ladite navette quand ladite navette est dans ladite seconde position.

3. Dispositif de traitement de plusieurs faces d'objets selon l'une quelconque des revendications précédentes, **caractérisé en ce que** ledit second équipement de manipulation (62) est placé de façon à manipuler les objets portés par ladite navette quand ladite navette est dans ladite seconde position.

4. Dispositif de traitement de plusieurs faces d'objets selon l'une quelconque des revendications précédentes, **caractérisé en ce que** ledit ou lesdits équipements de traitement comprennent au moins une imprimante (52, 53) apte à imprimer sur une face d'un objet.

5. Dispositif de traitement de plusieurs faces d'objets selon la revendication précédente, **caractérisé en ce que** ladite imprimante est du type « drop on demand ».

6. Dispositif de traitement de plusieurs faces d'objets selon l'une quelconque des revendications précédentes, **caractérisé en ce que** lesdits emplacements (41, 42) sont disposés, par rapport à ladite navette, de façon à passer successivement en regard dudit ou desdits équipements de traitement (51, 52, 53, 54, 86), lors du déplacement de ladite navette (4, 83, 88) entre ladite première position et ladite seconde position.

7. Dispositif de traitement de plusieurs faces d'objets selon la revendication précédente, **caractérisé en ce que** lesdits emplacements (41, 42) sont disposés, par rapport à ladite navette, de façon à ce que ledit second emplacement (42) passe en regard dudit ou desdits équipements de traitement (51, 52, 53, 54, 86) avant ledit premier emplacement (41) lors du déplacement de ladite navette depuis ladite première position vers ladite seconde position.

8. Dispositif de traitement de plusieurs faces d'objets selon l'une quelconque des revendications précédentes, **caractérisé en ce que** lesdits premier et second emplacements sont aptes chacun à recevoir un objet plat placé en position sensiblement horizontale, en laissant apparente la face supérieure dudit objet.

9. Dispositif de traitement de plusieurs faces d'objets selon l'une quelconque des revendications précédentes, **caractérisé en ce que** ladite navette (4, 83) est mobile en translation, entre ladite première position et ladite seconde position, le long d'au moins un rail de guidage (40, 84).

10. Dispositif de traitement de plusieurs faces d'objets selon l'une quelconque des revendications précédentes, **caractérisé en ce qu'**il comprend un manipulateur (6) comprenant une pince (62) constituant ledit second équipement de manipulation et une pince (61) constituant ledit troisième équipement de manipulation.

11. Dispositif de traitement de plusieurs faces d'objets selon l'une quelconque des revendications précédentes, **caractérisé en ce que** ladite navette (4, 83) est un chariot dans lequel sont définis lesdits emplacements, ledit chariot étant apte à porter les objets placés dans lesdits emplacements.

12. Procédé de traitement de plusieurs faces d'objet (21, 22, 23, 91, 92, 93, 94), comprenant
- une étape de placement d'un premier objet dans un premier emplacement (41, 831, 832, 882) prévu dans une navette (4, 83, 88), la navette présentant un second emplacement (42, 833, 834, 881) comprenant un second objet ;
- une étape de déplacement de ladite navette (4, 83, 88) le long d'une trajectoire au cours de laquelle une face de chacun desdits premier et second objets passe en regard d'un équipement de traitement (51, 52, 53, 54, 86) apte à effectuer un traitement sur ladite face ;
- une étape de déchargement dudit second objet dudit second emplacement (42, 833, 834, 881),
- une étape de déchargement dudit premier objet dudit premier emplacement (41, 831, 832, 882), de retournement dudit premier objet, et de placement dudit premier objet, dans une position retournée, dans ledit second emplacement (42, 833, 834, 881).

## Patentansprüche

1. Vorrichtung zum Bearbeiten (1, 8, 80) mehrerer Objektflächen, umfassend mindestens eine Bearbeitungseinrichtung (51, 52, 53, 54, 86), die geeignet ist, um eine Bearbeitung auf einer Fläche eines Objekts (21, 22, 23, 91, 92, 93, 94) auszuführen, die gegenüber der Verarbeitungseinrichtung vorgewiesen wird;
**dadurch gekennzeichnet, dass** sie auch umfasst:
- ein Shuttle (4, 83, 88), der mindestens zwei Stellen (41, 42, 831, 832, 833, 834) aufweist, die zum Aufnehmen von Objekten angepasst sind, wobei der Shuttle zwischen einer ersten Position und einer zweiten Position bewegbar montiert ist, indem er Zwischenpositionen passiert, in denen er eine Fläche von Objekten vorweist, die an den Stellen gegenüber der oder den Verarbeitungseinrichtung(en) platziert sind;
- eine erste Handhabungseinrichtung (32, 85), die geeignet ist, um ein Objekt an einer ersten der Stellen (41) zu platzieren, wenn der Shuttle in der ersten Position ist;
- eine zweite Handhabungseinrichtung (62), die geeignet ist, um ein Objekt zu entfernen, das an der zweiten der Stellen (42) platziert ist; und
- eine dritte Handhabungseinrichtung (61), die geeignet ist, um ein Objekt zu entfernen, das an der ersten Stelle (41) platziert ist, und es zu drehen, bevor es an der zweiten Stelle (42) platziert wird.

2. Vorrichtung zum Bearbeiten mehrerer Objektflächen nach dem vorstehenden Anspruch, **dadurch gekennzeichnet, dass** die dritte Handhabungseinrichtung (61) platziert ist, um die Objekte zu handhaben, die durch den Shuttle getragen werden, wenn der Shuttle in der zweiten Position ist.

3. Vorrichtung zum Bearbeiten mehrerer Objektflächen nach einem der vorstehenden Ansprüche, **dadurch gekennzeichnet, dass** die zweite Handhabungseinrichtung (62) platziert ist, um die Objekte zu handhaben, die durch den Shuttle getragen werden, wenn der Shuttle in der zweiten Position ist.

4. Vorrichtung zum Bearbeiten mehrerer Objektflächen nach einem der vorstehenden Ansprüche, **dadurch gekennzeichnet, dass** die Verarbeitungseinrichtung(en) mindestens einen Drucker (52, 53) umfassen, der geeignet ist, um eine Fläche eines Objekts zu bedrucken.

5. Vorrichtung zum Bearbeiten mehrerer Objektflächen nach dem vorstehenden Anspruch, **dadurch gekennzeichnet, dass** der Drucker ein "Drop-on-Demand"-Drucker ist.

6. Vorrichtung zum Bearbeiten mehrerer Objektflächen nach einem der vorstehenden Ansprüche, **dadurch gekennzeichnet, dass** die Stellen (41, 42) relativ zu dem Shuttle angeordnet sind, um bei der Bewegung des Shuttles (4, 83, 88) zwischen der ersten Position und der zweiten Position nacheinander gegenüber der oder den Bearbeitungseinrichtungen (51, 52, 53, 54, 86) zu passieren.

7. Vorrichtung zum Bearbeiten mehrerer Objektflächen nach dem vorstehenden Anspruch, **dadurch gekennzeichnet, dass** die Stellen (41, 42) relativ zu dem Shuttle so angeordnet sind, dass die zweite Stelle (42) bei der Bewegung des Shuttles von der ersten Position in die zweite Position vor der ersten Stelle (41) gegenüber der oder den Verarbeitungseinrichtung(en) (51, 52, 53, 54, 86) passiert.

8. Vorrichtung zum Bearbeiten mehrerer Objektflächen nach einem der vorstehenden Ansprüche, **dadurch gekennzeichnet, dass** die erste und die zweite Stelle jeweils geeignet sind, um ein flaches Objekt aufzunehmen, das in einer im Wesentlichen horizontalen Position platziert ist, wobei die obere Fläche des Objekts sichtbar bleibt.

9. Vorrichtung zum Bearbeiten mehrerer Objektflächen nach einem der vorstehenden Ansprüche, **dadurch gekennzeichnet, dass** der Shuttle (4, 83) zwischen der ersten Position und der zweiten Position entlang mindestens einer Führungsschiene (40, 84) translatorisch bewegbar ist.

10. Vorrichtung zum Bearbeiten mehrerer Objektflächen nach einem der vorstehenden Ansprüche, **dadurch gekennzeichnet, dass** sie ein Handhabungsgerät (6) umfasst, umfassend einen Greifer (62), der die zweite Handhabungseinrichtung ausbildet, und einen Greifer (61), der die dritte Manipulationseinrichtung ausbildet.

11. Vorrichtung zum Bearbeiten mehrerer Objektflächen nach einem der vorstehenden Ansprüche, **dadurch gekennzeichnet, dass** der Shuttle (4, 83) ein Wagen ist, in dem die Stellen definiert sind, wobei der Wagen geeignet ist, um die Objekte zu tragen, die an den Stellen platziert werden.

12. Verfahren zum Bearbeiten mehrerer Objektflächen (21, 22, 23, 91, 92, 93, 94), umfassend
- einen Schritt zum Platzieren eines ersten Objekts an einer ersten Stelle (41, 831, 832, 882), die in einem Shuttle (4, 83, 88) vorgesehen ist, wobei der Shuttle eine zweite Stelle (42, 833, 834, 881) vorweist, umfassend ein zweites Objekt;
- einen Schritt zum Bewegen des Shuttles (4, 83, 88) entlang einer Bahn, in deren Verlauf eine Fläche jedes der ersten und des zweiten Objekts gegenüber einer Bearbeitungseinrichtung (51, 52, 53, 54, 86) passiert, die geeignet ist, um eine Bearbeitung der Fläche auszuführen;
- einen Schritt zum Entladen des zweiten Objekts von der zweiten Stelle (42, 833, 834, 881),
- einen Schritt zum Entladen des ersten Objekts von der ersten Stelle (41, 831, 832, 882), zum Umdrehen des ersten Objekts und zum Platzieren des ersten Objekts in umgedrehter Position an der zweiten Stelle (42, 833, 834, 881).

## Claims

1. Device (1, 8, 80) for treating a plurality of surfaces of objects, comprising at least one treatment apparatus (51, 52, 53, 54, 86) capable of carrying out a treatment on a surface of an object (21, 22, 23, 91, 92, 93, 94) which is presented opposite said treatment apparatus;
**characterized in that** it also comprises:
- a shuttle (4, 83, 88) having at least two locations (41, 42, 831, 832, 833, 834) which are suitable for receiving objects, said shuttle being movably mounted between a first position and a second position, passing through intermediate positions in which it presents a surface of the objects positioned in said locations to be opposite said processing apparatus(es);
- a first handling apparatus (32, 85), capable of positioning an object in a first of said locations (41), when said shuttle is in said first position;
- a second handling apparatus (62) capable of removing an object which is positioned in the second of said locations (42); and
- a third handling apparatus (61) capable of removing an object which is positioned in said first location (41) and turning it before positioning it in said second location (42).

2. Device for treating a plurality of surfaces of objects according to the preceding claim, **characterized in that** said third handling apparatus (61) is positioned so as to handle the objects carried by said shuttle when said shuttle is in said second position.

3. Device for treating a plurality of surfaces of objects according to any one of the preceding claims, **characterized in that** said second handling apparatus (62) is positioned so as to handle the objects carried by said shuttle when said shuttle is in said second position.

4. Device for treating a plurality of surfaces of objects according to any one of the preceding claims, **characterized in that** said treatment apparatus(es) comprises at least one printer (52, 53) capable of printing on an object surface.

5. Device for treating a plurality of surfaces of objects according to the preceding claim, **characterized in that** said printer is a "drop on demand" printer.

6. Device for treating a plurality of surfaces of objects according to any one of the preceding claims, **characterized in that** said locations (41, 42) are arranged, with respect to said shuttle, so as to pass successively opposite said processing apparatus(es) (51, 52, 53, 54, 86), during the movement of said shuttle (4, 83, 88) between said first position and said second position.

7. Device for treating a plurality of surfaces of objects according to the preceding claim, **characterized in that** said locations (41, 42) are arranged, with respect to said shuttle, so that said second location (42) passes opposite said processing apparatus(es) (51, 52, 53, 54, 86) before said first location (41) during the movement of said shuttle from said first position to said second position.

8. Device for treating a plurality of surfaces of objects according to any one of the preceding claims, **characterized in that** said first location and second location are each capable of receiving a flat object positioned in a substantially horizontal position, leaving the upper surface of said object visible.

9. Device for treating a plurality of surfaces of objects according to any one of the preceding claims, **characterized in that** said shuttle (4, 83) is translatably movable between said first position and said second position along at least one guide rail (40, 84).

10. Device for treating a plurality of surfaces of objects according to any one of the preceding claims, **characterized in that** it comprises a manipulator (6) comprising a gripper (62) constituting said second handling apparatus and a gripper (61) constituting said third handling apparatus.

11. Device for treating a plurality of surfaces of objects according to any one of the preceding claims, **characterized in that** said shuttle (4, 83) is a carriage in which said locations are defined, said carriage being capable of carrying the objects which are positioned in said locations.

12. Method for treating a plurality of surfaces of objects (21, 22, 23, 91, 92, 93, 94), comprising
- a step of positioning a first object in a first location (41, 831, 832, 882) provided in a shuttle (4, 83, 88), the shuttle having a second location (42, 833, 834, 881) comprising a second object;
- a step of moving said shuttle (4, 83, 88) along a trajectory during which a surface of each of said first object and second object passes opposite a treatment apparatus (51, 52, 53, 54, 86) which is capable of carrying out a treatment on said surface;
- a step of unloading said second object from said second location (42, 833, 834, 881),
- a step of unloading said first object from said first location (41, 831, 832, 882), turning over said first object, and positioning said first object, in an inverted position, in said second location (42, 833, 834, 881).
